# EUROPEAN PATENT APPLICATION

(11) **EP 4 456 287 A1**
(43) Date of publication of application: **30.10.2024**
(21) Application number: 22956883.7
(22) Date of filing: 31.08.2022
(51) Int. Cl.: H01M 50/209, H01M 50/264

(54) **BATTERY, ELECTRICAL DEVICE, AND PREPARATION METHOD FOR BATTERY**

(71) Applicant: Contemporary Amperex Technology Co., Limited, Ningde, Fujian 352100 (CN)
(72) Inventor: WANG, Hong, Ningde, Fujian 352100 (CN); CHENG, Qi, Ningde, Fujian 352100 (CN); LIU, Jiang, Ningde, Fujian 352100 (CN); LI, Quankun, Ningde, Fujian 352100 (CN); TANG, Daichun, Ningde, Fujian 352100 (CN)
(74) Representative: Jacob, Reuben Ellis
(86) International application number: PCT/CN2022/116240
(87) International publication number: WO 2024/045054

(57) **Abstract**

Embodiments of the present application provide a battery, an electrical device, and a preparation method for the battery. The battery comprises: a battery module, comprising a first battery cell and a second battery cell which are arranged in series in a first direction, wherein a first electrode output portion of the first battery cell and a second electrode output portion of the second battery cell are electrically connected in a welding manner, and the first direction is the length direction of the battery; a support, provided between the first battery cell and the second battery cell, wherein the support is provided with a first accommodating space, and the first accommodating space is used for accommodating the first electrode output portion and the second electrode output portion which are electrically connected to each other; and a structural adhesive, used for fixedly connecting the first electrode output portion and the second electrode output portion to the support. The support is provided with an adhesive filling channel which is used for introducing the structural adhesive to the position between the first electrode output portion and the support and the position between the second electrode output portion and the support. The battery and the electrical device provided in the embodiments of the present application can reduce a tearing risk at a connecting position of battery cells.

## Description

### TECHNICAL FIELD

The present application relates to the technical field of batteries, in particular to a battery, an electricity consumption device and a method for producing a battery.

### BACKGROUND

In order to increase the capacity of a battery, a plurality of battery cells connected in series are usually placed in a housing having certain strength to form the battery. Whether the battery works reliably or not relates to the safety of the entire battery and even an electricity consumption device, so that there are relatively high requirements for the electrical connection stability of the battery during design of the battery.

### SUMMARY

The present application provides a battery, an electricity consumption device and a method for producing the battery, which can reduce the risk of tearing at junctions of battery cells.

In a first aspect, the battery is provided and comprises: a battery module which comprises a first battery cell and a second battery cell connected in series in a first direction, wherein a first electrode output portion of the first battery cell is electrically connected to a second electrode output portion of the second battery cell in a welded manner, and the first direction is a length direction of the battery; a support which is arranged between the first battery cell and the second battery cell, wherein the support is provided with a first accommodating space, and the first accommodating space is configured to accommodate the first electrode output portion and the second electrode output portion which are electrically connected to each other; and a structural adhesive which is configured to fixedly connect the first electrode output portion and the second electrode output portion to the support, wherein the support is provided with an adhesive filling channel which is configured to guide the structural adhesive into spaces between the first electrode output portion and the second electrode output portion which are electrically connected and the support.

In this embodiment, the support is arranged between the first battery cell and the second battery cell such that the first electrode output portion and the second electrode output portion which are connected are arranged in the first accommodating space of the support; and the adhesive filling channel is arranged on the support to guide the structural adhesive into the spaces between the first electrode output portion and the second electrode output portion which are connected and the support, so that the first electrode output portion and the second electrode output portion which are connected can be fixedly connected to the support, the rigidity between the battery module and the support which are connected in series can be enhanced, the first electrode output portion and the second battery electrode output portion which are connected can be prevented from shaking in the first accommodating space of the support, the risk of tearing can be reduced, and the electrical connection stability of the battery can be improved.

In a possible implementation, the support comprises: a support body; a first fixing member which is stacked with the support body in a third direction, wherein the third direction is a thickness direction of the battery; and the first accommodating space is formed between the support body and the first fixing member, the adhesive filling channel comprises first adhesive injection holes, and the first adhesive injection holes are formed in the first fixing member.

In this embodiment, by means of the support body and the first fixing member which are stacked in the third direction, the first accommodating space for limiting the displacement of the first electrode output portion and the second electrode output portion in the third direction can be formed; and the first adhesive injection holes are formed in the first fixing member, so that the structural adhesive can be injected via the first adhesive injection holes into the spaces between the first electrode output portion and the second electrode output portion and the support so as to fix the first electrode output portion and the second electrode output portion to the support, and the risk of tearing at junctions of the first electrode output portion and the second electrode output portion can be reduced.

In a possible implementation, the first fixing member comprises a first wall and two first side walls, the first wall and the support body are arranged opposite each other, the two first side walls respectively extend towards the support body from two ends of the first wall in the first direction, and the first adhesive injection holes are formed in the first wall.

In a possible implementation, the battery module further comprises: a third battery cell and a fourth battery cell connected in series in the first direction, wherein a third electrode output portion of the third battery cell is electrically connected to a fourth electrode output portion of the fourth battery cell, the third battery cell and the first battery cell are stacked in the third direction, and the fourth battery cell and the second battery cell are stacked in the third direction.

In this embodiment, a plurality of battery cells are arranged in multiple rows in the first direction, which can increase the energy density of the battery.

In a possible implementation, the support further comprises: a second fixing member which is stacked with the support body in the third direction, wherein the support body is arranged between the first fixing member and the second fixing member, and a second accommodating space is formed between the support body and the second fixing member; and the structural adhesive is further configured to fixedly connect the third electrode output portion and the fourth electrode output portion to the support, and the adhesive filling channel is further configured to guide the structural adhesive into spaces between the third electrode output portion and the fourth electrode output portion and the support.

In this embodiment, by means of the support body and the second fixing member which are stacked in the third direction, the second accommodating space for limiting the displacement of the third electrode output portion and the fourth electrode output portion in the third direction can be formed; and the adhesive filling channel can further guide the structural adhesive into the spaces between the third electrode output portion and the fourth electrode output portion and the support so as to fix the third electrode output portion and the fourth electrode output portion to the support, so that the risk of tearing at junctions of the third electrode output portion and the fourth electrode output portion can be reduced.

In a possible implementation, the adhesive filling channel further comprises second adhesive injection holes, the second adhesive injection holes are formed in the support body, and the second adhesive injection holes are configured to guide the structural adhesive into the space between at least one of the first battery cell, the second battery cell, the third battery cell and the fourth battery cell and the support body, so as to fixedly connect the at least one battery cell to the support.

In this embodiment, the battery cells are fixedly connected to the support by means of the structural adhesive, so that the rigidity between the battery cells and the support can be enhanced, the relative displacement of the battery cells and the support can be prevented, and damage to the battery cells can be reduced.

In a possible implementation, the support body is provided with a cavity.

In this embodiment, the support body is of a structure provided with the cavity, so that the weight of the support can be reduced, and then the weight of the battery can be reduced.

In a possible implementation, the cavity comprises two connecting arms distributed in the first direction and two supporting walls distributed in the third direction, and the second adhesive injection holes are formed in at least one of the two connecting arms and at least one of the two supporting walls.

In a possible implementation, the second adhesive injection holes are formed in the two connecting arms and the two supporting walls.

In this embodiment, the second adhesive injection holes are formed in the two connecting arms and the two supporting walls of the support body, so that the structural adhesive can be guided into the spaces between the battery cells and the support, and the rigidity between the battery module and the support can be enhanced.

In a possible implementation, the second adhesive injection holes are further configured to guide the structural adhesive into spaces between the first battery cell and the third battery cell and between the second battery cell and the fourth battery cell.

In a possible implementation, in the third direction, the size of the battery module is H1, the size of a coverage zone of the structural adhesive is H2, 1/3 ≤ H2/H1 ≤ 1, and the third direction is the thickness direction of the battery.

In this embodiment, in the third direction, the size H2 of the coverage zone of the structural adhesive and the size of the battery module are set as 1/3 ≤ H2/H1 ≤ 1, so that the problem that the requirement for the mechanical strength cannot be met due to the insufficient strength caused by an excessively thin coating zone can be avoided, and the problems of abnormities in assembly and appearance of the battery module due to an excessively thick coating zone can also be avoided.

In a possible implementation, any one battery cell of the battery module comprises a main body portion, an electrode output portion and a stepped portion, and the main body portion is connected to the electrode output portion by means of the stepped portion.

In a possible implementation, in the third direction, the size of the stepped portion is H3, the size of the main body portion is H4, and 1/3 ≤ H3/H4 ≤ 1.

In this embodiment, in the third direction, the size H3 of each of the stepped portions and the size H4 of each of the main body portions are set as 1/3 ≤ H3/H4 ≤ 1, so that a structural weak point formed due to uneven coverage of the structural adhesive due to the excessively large height difference between the stepped portion and the main body portion can be avoided.

In a possible implementation, in the first direction, the size of the stepped portion is L2, the size of the structural adhesive covering the stepped portion is L1, and 1/3 ≤ L1/L2 ≤ 1.

In this embodiment, in the first direction, the size L2 of each of the stepped portions and the size L1 of the structural adhesive covering the stepped portion are set as 1/3 ≤ L1/L2 ≤ 1, so that the problem that the requirement for the rigidity cannot be met due to the excessively few adhesives, and the problem of local stress concentration of each battery cell due to the fact that the too many adhesive overflows to the main body portion can also be avoided.

In a possible implementation, the structural adhesive covers part of an upper surface and part of a lower surface of the battery module.

In this embodiment, the structural adhesive covers part of the upper surface and part of the lower surface of the battery module and forms a riveted structure with the battery module, so that the battery module is connected to the support more stably.

In a possible implementation, in a second direction, the size of the support is greater than the size of the battery module; and/or in the third direction, the size of the support is greater than the size of the battery module.

In this embodiment, in the third direction, the size of the support is set to be greater than the size of the battery module, and in the second direction, the size of the support is set to be greater than the size of the battery module, so that when the battery is subjected to a shock impact, the support makes contact with a housing firstly to play a buffering role, thereby reducing the damage to the battery cells.

In a possible implementation, first reinforcing ribs extending from the first wall to the support body are arranged between the two first side walls.

In this embodiment, the first reinforcing ribs are arranged on the first wall, so that the rigidity of the first wall can be enhanced.

In a possible implementation, a plurality of the first reinforcing ribs are distributed in a spaced manner in the first direction and/or the second direction; or a plurality of the first reinforcing ribs are distributed in a crossing manner in the first direction and the second direction.

In this embodiment, the plurality of first reinforcing ribs are arranged in the first direction and/or the second direction, so that supporting of the first electrode output portion and the second electrode output portion can be enhanced.

In a possible implementation, the first wall is provided with two symmetric first clamping groove structures, and the two first clamping groove structures are configured to allow an external assembly apparatus to grab the first fixing member.

In this embodiment, the two symmetric first clamping groove structures are arranged on the first wall of the first fixing member, thereby facilitating the external assembly apparatus grabbing the first fixing member, and improving the assembly efficiency.

In a possible implementation, the support body comprises a first supporting wall, the first supporting wall is provided with first mounting holes, at least one end of the first fixing member in the second direction is provided with first buckles extending towards the first supporting wall, the first buckles are clamped with the first mounting holes, and the second direction is a width direction of the battery.

In this embodiment, the first buckles of the first fixing member are clamped with the first mounting holes in the first supporting wall, so that the support body can be fixedly connected to the first fixing member, and the first electrode output portion and the second battery electrode output portion which are connected can be limited within the first accommodating space between the first supporting wall and the first fixing member.

In a possible implementation, one end of the first supporting wall in the second direction is provided with a first stop block, and the first stop block is configured to limit movements of the first electrode output portion and the second electrode output portion in the second direction.

In this embodiment, the first stop block is arranged on the first supporting wall to limit the first electrode output portion and the second electrode output portion in the second direction, so that the risk of tearing caused by shaking of the first electrode output portion and the second electrode output portion which are connected can be reduced.

In a possible implementation, the first supporting wall is provided with a first accommodating groove extending in the second direction, the first accommodating groove accommodates a first sampling terminal, and the first sampling terminal is configured to acquire parameters of the first battery cell and/or the second battery cell.

In this embodiment, the first accommodating groove is formed in the first supporting wall to accommodate the first sampling terminal, so that the first battery cell and/or the second battery cell can be monitored in real time, and the safety of the battery can be improved.

In a possible implementation, in the third direction, the second fixing member and the first fixing member are arranged symmetrically relative to the support body.

In this embodiment, the second fixing member and the first fixing member are arranged symmetrically relative to the support body, so that the production difficulty of the support can be reduced.

In a possible implementation, the battery further comprises: a housing, wherein the housing is configured to accommodate the battery module and the support.

In a possible implementation, the housing is provided with an opening; the battery further comprises: an end cover which covers the opening so as to encapsulate the battery module and the support in the housing; and the end cover is provided with a positive electrode terminal and a negative electrode terminal, the positive electrode terminal is electrically connected to a positive electrode output portion of the battery module, and the negative electrode terminal is electrically connected to a negative electrode output portion of the battery module.

In a second aspect, the electricity consumption device is provided and comprises the battery in the first aspect and any possible implementation manner of the first aspect, wherein the battery is configured to provide electric energy for the electricity consumption device.

In a third aspect, a method for producing a battery is provided and comprises: welding a first electrode output portion of a first battery cell and a second electrode output portion of a second battery cell, and arranging the first battery cell and the second battery cell side by side in a first direction, wherein the first direction is a length direction of the battery; assembling the welded first electrode output portion and the welded second electrode output portion to a first accommodating space of a support in a second direction, wherein the second direction is a width direction of the battery; and injecting a structural adhesive from an adhesive filling channel of the support such that the structural adhesive is guided into spaces between the first electrode output portion and the second electrode output portion and the support.

### BRIEF DESCRIPTION OF THE DRAWINGS

In order to explain technical solutions of embodiments of the present application more clearly, drawings needed in the embodiments of the present application will be briefly introduced below. Obviously, the drawings in the following description are only some embodiments of the present application, and for those of ordinary skill in the art, other drawings can be obtained according to these drawings without involving any inventive effort.
FIG. 1 is a structural schematic diagram of a vehicle disclosed in an embodiment of the present application.
FIG. 2 is a three-dimensional schematic diagram of a battery disclosed in an embodiment of the present application.
FIG. 3 is a three-dimensional schematic diagram of another battery disclosed in an embodiment of the present application.
FIG. 4 shows a schematic stereogram of a support in an embodiment of the present application.
FIG. 5 shows a schematic exploded view of the support in the embodiment of the present application.
FIG. 6 shows a schematic stereogram of a support body in FIG. 4.
FIG. 7 shows a schematic stereogram of a first fixing member and a second fixing member in FIG. 4.
FIG. 8 shows another schematic stereogram of the first fixing member and the second fixing member in FIG. 4.
FIG. 9 shows another schematic stereogram of the support body in FIG. 4.
FIG. 10 shows a partial front view of the battery 100 as shown in FIG. 3.
FIG. 11 is a front view of the battery 100 as shown in FIG. 3.
FIG. 12 is a top view of the battery 100 as shown in FIG. 3.
FIG. 13 is a schematic exploded view of a battery disclosed in the present application.
FIG. 14 is a schematic block diagram of a method for producing a battery in an embodiment of the present application.

With regard to the accompanying drawings, they are not drawn to the actual scale.

### DETAILED DESCRIPTION OF THE EMBODIMENTS

In order to make the purposes, technical solutions and advantages of embodiments of the present application more clear, the technical solutions in the embodiments of the present application will be described clearly below in combination with the accompanying drawings in the embodiments of the present application. Obviously, the described embodiments are only part of embodiments of the present application, not all of them. On the basis of the embodiments of the present application, all other embodiments obtained by those of ordinary skill in the art without involving any inventive effort should fall within the scope of protection of the present application.

Unless otherwise specified, all technical and scientific terms used in the present application have the same meanings as those commonly understood by those skilled in the art of the present application. The terms used in the description of the present application are only for the purpose of describing the particular embodiments, and are not intended to limit the present application. The terms "comprising" and "being provided with" and their variants in the description and the claims of the present application and the brief description of the drawings above are intended to cover non-exclusive inclusions. The terms "first", "second" and the like in the description and the claims of the present application or the above-mentioned drawings are intended to distinguish different objects, and are not intended to describe the specific sequence or the priority.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it may be "fixedly connected" or "detachably connected", or "integrally connected"; and it may be "directly connected" or "indirectly connected by means of an intermediate medium". The specific meanings of the above terms in the present application may be understood by those of ordinary skill in the art depending on specific circumstances.

The reference to "embodiments" in the present application means the specific features, structures or characteristics described in conjunction with the embodiments may be included in at least one embodiment of the present application. The phrase appearing at each position of the description does not necessarily indicate the same embodiment, and it is not an exclusively independent or alternative embodiment of other embodiments. Those skilled in the art should explicitly or implicitly understand that the embodiments described in the present application may be combined with other embodiments.

The term "and/or" in the present application is simply a description of the association relationship of the associated objects, indicating that there may be three relationships, for example, A and/or B may indicate that A exists alone, A and B exist at the same time, and B exists alone. In addition, the character "/" in the present application generally means that the associated objects are in an "or" relationship.

In the present application, "a plurality of" means two or more (including two), by the same reasoning, "a plurality of groups" means two or more groups (including two groups), and "a plurality of sheets" means two or more sheets (including two sheets).

In the present application, battery cells may include lithium ion secondary batteries, lithium ion primary batteries, lithium sulfur batteries, sodium lithium ion batteries, sodium ion batteries or magnesium ion batteries, which are not limited in the embodiments of the present application. The battery cells may be cylindrical, flat, rectangular or in other shapes, which are also not limited in the embodiments of the present application. The battery cells are generally divided into the following three types according to encapsulation manners: cylindrical cell cells, square cell cells and soft-pack cell cells, which are also not limited in the embodiments of the present application.

Each battery cell includes an electrode assembly and an electrolyte, and the electrode assembly includes a positive plate, a negative plate and a diaphragm. The battery cell mainly works by relying on metal ions moving between the positive plate and the negative plate. The positive plate includes positive current collectors and a positive active substance layer, the positive active substance layer coats surfaces of the positive current collectors, the current collectors not coated with the positive active substance layer protrude out of the current collectors coated with the positive active substance layer, and the current collectors not coated with the positive active substance layer serve as positive tabs. The lithium ion battery is taken as an example, the positive current collectors may be made of aluminum, and a positive active substance may be lithium cobalt, lithium iron phosphate, ternary lithium or lithium manganate. The negative plate includes negative current collectors and a negative active substance layer, the negative active substance layer coats surfaces of the negative current collectors, the current collectors not coated with the negative active substance layer protrude out of the current collectors coated with the negative active substance layer, and the current collectors not coated with the negative active substance layer serve as negative tabs. The negative current collectors may be made of copper, and a negative active substance may be carbon or silicon. In order to ensure passing of a large current without fusing, a plurality of positive tabs are provided and are stacked together, and a plurality of negative tabs are provided and are stacked together. The diaphragm may be made of PP or PE. In addition, the electrode assembly may be in a wound structure or a laminated structure, and the embodiments of the present application are not limited to this.

In order to increase the capacity of the battery, a plurality of battery cells connected in series are usually placed in a housing having certain strength to form the battery. During the usage process of the battery, the junctions of the battery cells will shake, resulting in the risk of tearing.

The applicant proposes that a support can be arranged between the two battery cells connected in series and connected portions of the two battery cells are arranged in an accommodating space of the support, so that the junctions of the battery cells can be well fixed, shaking of the junctions can be prevented, the risk of tearing can be reduced, and the electrical connection stability of the battery can be improved.

Although the support can enhance the overall rigidity of the battery, the applicant found that there are still gaps between the junctions of the support and the battery cells, resulting in shaking of the junctions, that is, there is still a risk of tearing.

In view of this, the present application provides a battery, a support is arranged on two battery cell supports connected in series such that junctions of the two battery cells are arranged in an accommodating space of the support; and an adhesive filling channel is arranged on the support to guide a structural adhesive into the spaces between the junctions and the support, so that the junctions can be fixedly connected to the support, the rigidity between a battery module and the support which are connected in series can be enhanced, the junctions can be prevented from shaking in the accommodating space of the support, the risk of tearing can be reduced, and the electrical connection stability of the battery can be improved.

The technical solutions described in the embodiments of the present application are applicable to various devices using batteries, for example, mobile phones, portable apparatuses, laptops, battery cars, electric toys, electric tools, electric vehicles, ships and aircraft, and the aircraft includes, for example, airplanes, rockets, space shuttles and spaceships.

It should be understood that the technical solutions described in the embodiments of the present application are not only applicable to the above-mentioned electricity consumption devices, but also to all apparatuses using the batteries. However, for the simplicity in description, the embodiments below are illustrated by taking an electric vehicle as an example.

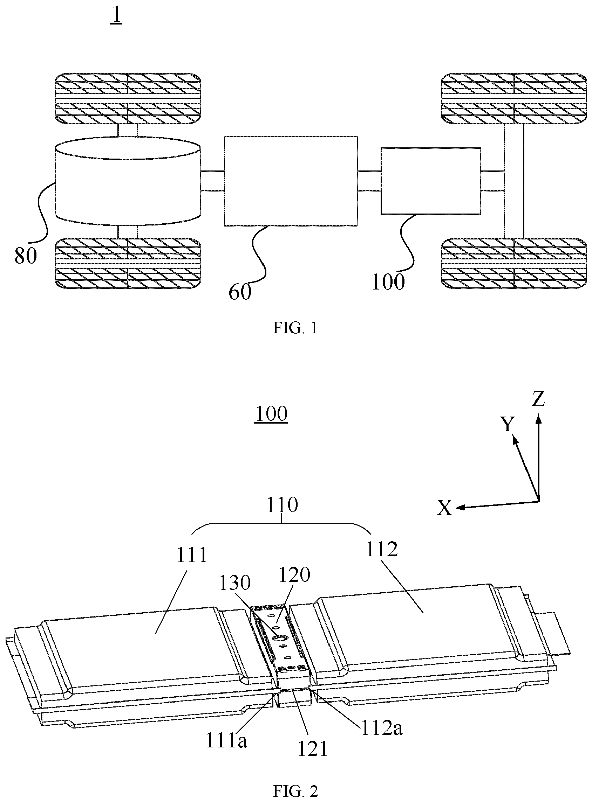

For example, as shown in FIG. 1 which is a structural schematic diagram of a vehicle 1 in an embodiment of the present application, the vehicle 1 may be a fuel vehicle, a gas vehicle or a new energy vehicle, and the new energy vehicle may be a battery electric vehicle, a hybrid electric vehicle or an extended-range vehicle. A motor 80, a controller 60 and a battery 100 may be arranged in the vehicle 1, and the controller 60 is configured to control the battery 100 to supply power to the motor 80. For example, the battery 100 may be arranged at the bottom, the head or the tail of the vehicle 1. The battery 100 may be applied to power supply of the vehicle 1, for example, the battery 100 may serve as an operating power source of the vehicle 1, may be applied to a circuit system of the vehicle 1, and for example, may be applied to meet the working power demands during starting, navigation and operation of the vehicle 1. In another embodiment of the present application, the battery 100 can serve as the operating power source of the vehicle 1, and can also serve as a driving power source of the vehicle 1 to replace or partially replace fuel oil or natural gas to provide driving power for the vehicle 1.

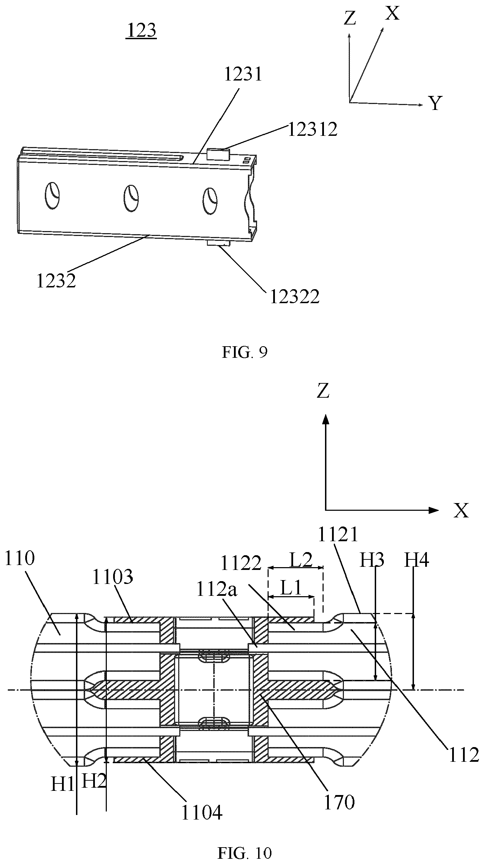

FIG. 2 shows a schematic stereogram of the battery 100 in an embodiment of the present application. As shown in FIG. 2, the battery 100 includes a battery module 110, wherein the battery module 110 includes a first battery cell 111 and a second battery cell 112 connected in series in a first direction X, a first electrode output portion 111a of the first battery cell 111 is electrically connected to a second electrode output portion 112a of the second battery cell in a welded manner, and the first direction X is a length direction of the battery 100; and the battery 100 further includes a support 120, wherein the support 120 is arranged between the first battery cell 111 and the second battery cell 112, the support 120 is provided with a first accommodating space 121, and the first accommodating space 121 is configured to accommodate the first electrode output portion 111a and the second electrode output portion 112a. The battery 100 further includes a structural adhesive 170 (which can be seen in FIG. 10) which is configured to fixedly connect the first electrode output portion 111a and the second electrode output portion 112a to the support 120. The support 120 is further provided with an adhesive filling channel 130 which is configured to guide the structural adhesive into spaces between the first electrode output portion 111a and the second electrode output portion 112a and the support 120, so as to fixedly connect the first electrode output portion 111a and the second electrode output portion 112a to the support 120.

To facilitate description, various directions are defined firstly herein. As shown in FIG. 2, the first direction X is the length direction of the battery 100, a second direction Y is a width direction of the battery 100, and a third direction Z is a thickness direction of the battery 100.

Each electrode output portion in the present application may refer to the portion of the above-mentioned tab penetrating out of an outer package of the battery cell, and may also be understood as an electrical connection sheet electrically connected to the tab outside the outer package of the battery cell, which is not limited in the embodiments of the present application.

Optionally, the battery module 110 may include a plurality of battery cells, and the plurality of battery cells are connected in series, that is, a positive electrode output portion of one battery cell is connected to a negative electrode output portion of another adjacent battery cell. The plurality of battery cells may be arranged in a row in the first direction X as shown in FIG. 2. Optionally, the plurality of battery cells may also be arranged in multiple rows in the first direction X.

In this embodiment of the present application, the first electrode output portion 111a of the first battery cell 111 being electrically connected to the second electrode output portion 112a of the second battery cell 112 in the welded manner may include the first electrode output portion 111a being electrically connected to the second electrode output portion 112a in an ultrasonic welded manner or a laser welded manner. Optionally, the first electrode output portion 111a and the second electrode output portion 112a may be directly welded or be welded by means of a connecting member. The first electrode output portion 11 1a of the first battery cell 111 and the second electrode output portion 112a of the second battery cell 112 are welded before the support 120 is assembled, so that the first electrode output portion 111a and the second battery electrode output portion 112a which are connected can be inserted into the first accommodating space 121 of the support 120 in the second direction Y.

Therefore, the support 120 is arranged between the first battery cell 111 and the second battery cell 112 such that the first electrode output portion 111a and the second battery electrode output portion 112a which are connected are arranged in the first accommodating space 121 of the support 120; and the adhesive filling channel 130 is arranged on the support 120 to guide the structural adhesive 170 into the spaces between the first electrode output portion 111a and the second battery electrode output portion 112a which are connected and the support 120, so that the first electrode output portion 111a and the second battery electrode output portion 112a which are connected can be fixedly connected to the support 120, the rigidity between the battery module 110 and the support 120 which are connected in series can be enhanced, the first electrode output portion 111a and the second battery electrode output portion 112a which are connected can be prevented from shaking in the first accommodating space 121 of the support 120, the risk of tearing can be reduced, and the electrical connection stability of the battery 100 can be improved.

Although this embodiment of the present application is described by taking the connection of the first battery cell 111 and the second battery cell 112 as an example, when there are two or more battery cells in one row, the battery 100 in the present application may include a plurality of supports, the structure and the function of each support may refer to those of the support 120 between the first battery cell 111 and the second battery cell 112, and for simplicity, the supports between other battery cells are not described in detail herein.

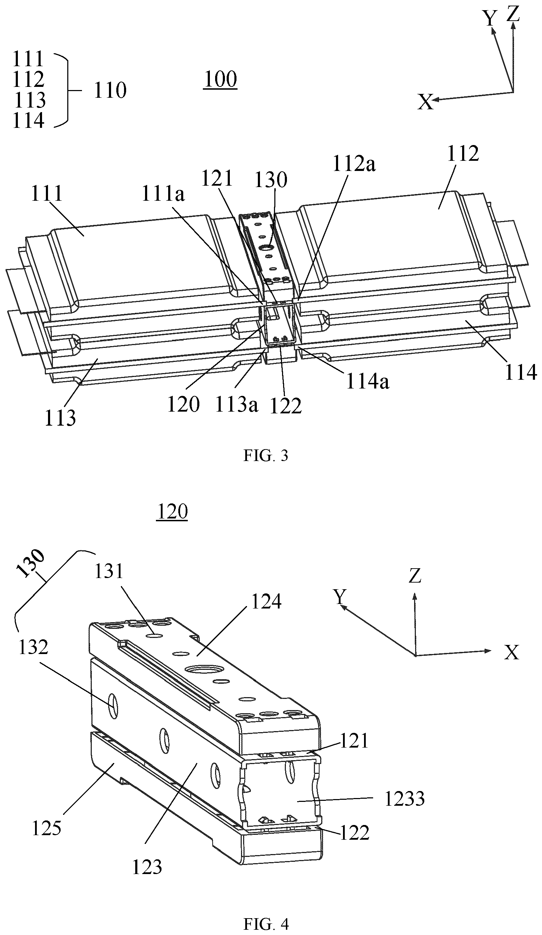

FIG. 3 shows another schematic stereogram of the battery 100 in the embodiment of the present application. As shown in FIG. 3, the battery 100 includes the battery module 110, wherein the battery module 110 includes the first battery cell 111 and the second battery cell 112 connected in series in the first direction X; the battery module 110 further includes a third battery cell 113 and a fourth battery cell 114 connected in series in the first direction X; the first battery cell 111 and the third battery cell 113 are stacked in the third direction Z; and the second battery cell 112 and the fourth battery cell 114 are stacked in the third direction. The first electrode output portion 111a of the first battery cell 111 is electrically connected to the second electrode output portion 112a of the second battery cell 112 in the welded manner. A third electrode output portion 113a of the third battery cell 113 is electrically connected to a fourth electrode output portion 114a of the fourth battery cell 114 in a welded manner.

In this embodiment, a plurality of the battery cells are arranged in multiple rows in the first direction X, which can increase the energy density of the battery 100.

Similarly, in this embodiment of the present application, the third electrode output portion 113a of the third battery cell 113 being electrically connected to the fourth electrode output portion 114a of the fourth battery cell 114 in the welded manner may include the third electrode output portion 113a being electrically connected to the fourth electrode output portion 114a in an ultrasonic welded manner or a laser welded manner. Optionally, the third electrode output portion 113a and the fourth electrode output portion 114a may be directly welded or be welded by means of a connecting member.

Optionally, as shown in FIG. 3, the battery 100 further includes the support 120, wherein the support 120 is provided with the first accommodating space 121 and a second accommodating space 122, the first accommodating space 121 and the second accommodating space 122 are arranged in a spaced manner in the third direction Z, the first accommodating space 121 is configured to accommodate the first electrode output portion 111a and the second electrode output portion 112a, and the second accommodating space 122 is configured to accommodate the third electrode output portion 113a and the fourth electrode output portion 114a. The support 120 is further provided with the adhesive filling channel 130 which is configured to guide the structural adhesive 170 into the spaces between the first electrode output portion 111a and the second electrode output portion 112a and the support 120, so as to fixedly connect the first electrode output portion 111a and the second electrode output portion 112a which are electrically connected to each other to the support 120. The adhesive filling channel 130 is further configured to guide the structural adhesive 170 into spaces between the third electrode output portion 113a and the fourth electrode output portion 114a and the support 120, so as to fixedly connect the third electrode output portion 113a and the fourth electrode output portion 114a which are electrically connected to each other to the support 120.

In this embodiment, connecting portions of two pairs of the adjacent battery cells arranged in two rows are supported by means of one support, and the overall strength of the two adjacent rows of battery cells can be enhanced, so that the battery module 110 can be assembled in a housing more conveniently. In addition, by means of the adhesive filling channel on the support 120, the first electrode output portion 111a and the second electrode output portion 112a can be fixedly connected to the support 120, and the third electrode output portion 113a and the fourth electrode output portion 114a can also be fixedly connected to the support 120, so that the rigidity between the battery module 110 and the support 120 which are connected in series is enhanced, the first electrode output portion 111a and the second battery electrode output portion 112a which are connected are prevented from shaking in the first accommodating space 121 of the support 120, the third electrode output portion 113a and the fourth electrode output portion 114a which are connected are prevented from shaking in the second accommodating space 122 of the support 120, the risk of tearing is reduced, and the electrical connection stability of the battery 100 is improved.

It should be noted that when the plurality of battery cells of the battery module 110 in the present application are arranged in two or more rows in the first direction X, the support 120 may be provided with two or more accommodating spaces in a spaced manner in the third direction Z, and each accommodating space accommodates the connecting portions of the two corresponding battery cells, which are not limited in this embodiment of the present application.

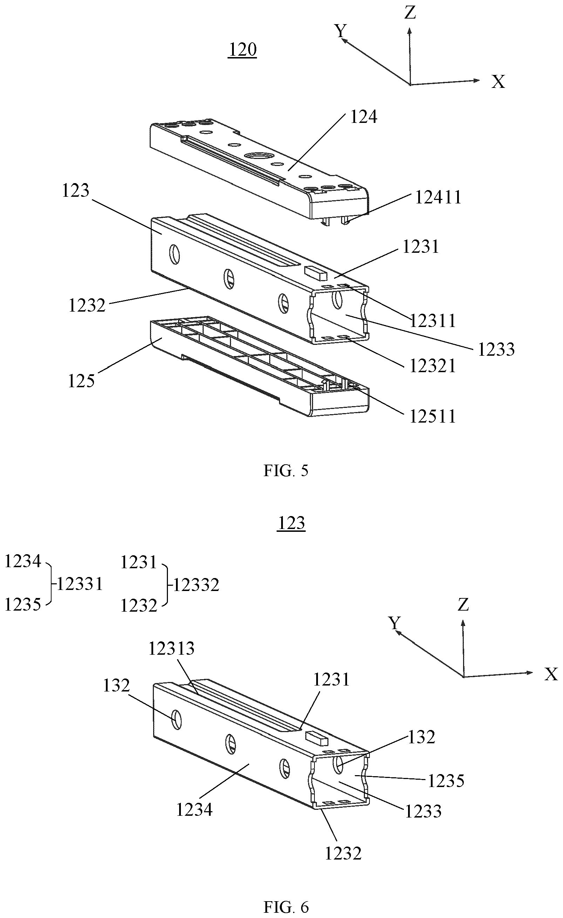

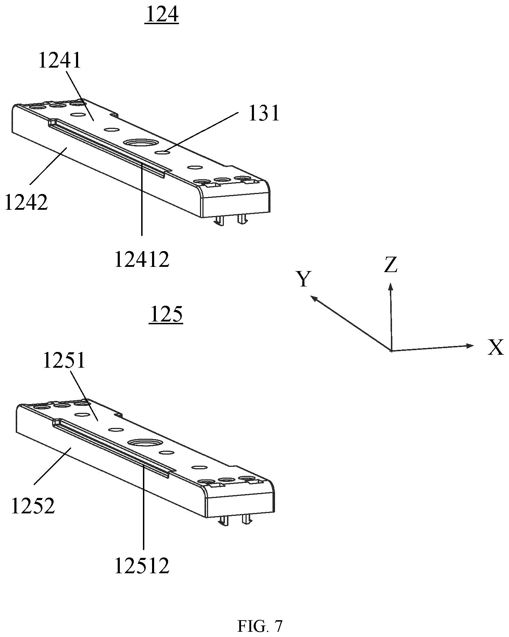

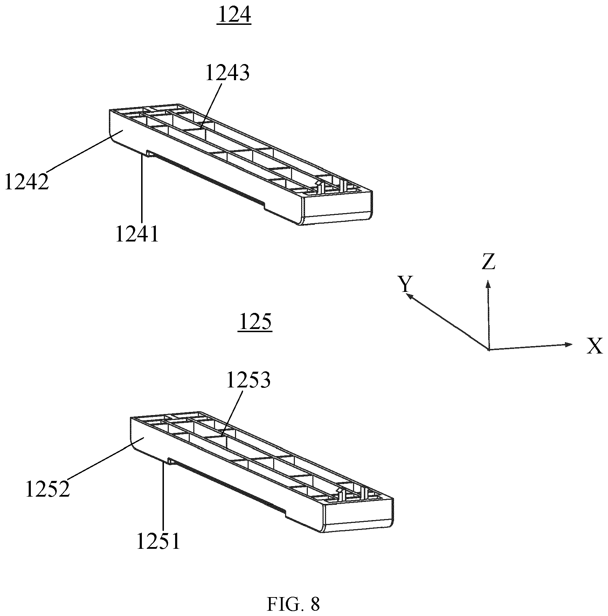

FIG. 4 shows a schematic stereogram of the support 120 in an embodiment of the present application. FIG. 5 is a schematic exploded view of the support 120 as shown in FIG. 4. FIG. 6 shows a schematic stereogram of a support body 123 in FIG. 4. FIG. 7 shows a schematic stereogram of a first fixing member 124 and a second fixing member 125 in FIG. 4. FIG. 8 shows another schematic stereogram of the first fixing member 124 and the second fixing member 125 in FIG. 4. FIG. 9 shows another schematic stereogram of the support body 123 in FIG. 4. Optionally, as shown in FIG. 4, the support 120 may include the support body 123, the support 120 may also include the first fixing member 124, and the first fixing member 124 and the support body 123 are stacked in the third direction Z. The first accommodating space 121 is formed between the support body 123 and the first fixing member 124, and the first electrode output portion 111a and the second battery electrode output portion 112a are arranged in the first accommodating space 121 between the first fixing member 124 and the support body 123. The adhesive filling channel 130 includes first adhesive injection holes 131, and the first adhesive injection holes 131 are formed in the first fixing member 124.

Optionally, the support body 123 may be of a plate-shaped structure, that is, the support body 123 is a hexahedron. For example, the support body 123 is a cuboid with six surfaces being planes. For another example, the support body 123 is a hexahedron with partial uneven surfaces.

In this embodiment, by means of the support body 123 and the first fixing member 124 which are stacked in the third direction Z, the first accommodating space 121 for limiting the displacement of the first electrode output portion 111a and the second electrode output portion 112a in the third direction Z can be formed; and the first adhesive injection holes 131 are formed in the first fixing member 124, so that the structural adhesive 170 can be injected via the first adhesive injection holes 131 into the spaces between the first electrode output portion 111a and the second electrode output portion 112a and the support 120 so as to fix the first electrode output portion 111a and the second electrode output portion 112a to the support 120, and the risk of tearing at junctions of the first electrode output portion 111a and the second electrode output portion 112a can be reduced.

Optionally, as shown in FIG. 5, the support body 123 includes a first supporting wall 1231, and the first supporting wall 1231 is provided with first mounting holes 12311. At least one end of the first fixing member 124 in the second direction Y is provided with first buckles 12411 extending towards the first supporting wall 1231, and the first buckles 12411 are clamped with the first mounting holes 12311 so as to connect the support body 123 and the first fixing member 124.

In this embodiment, the first buckles 12411 of the first fixing member 124 are clamped with the first mounting holes 12311 in the first supporting wall 1231, so that the support body 123 can be fixedly connected to the first fixing member 124, and the first electrode output portion 111a and the second battery electrode output portion 112 which are connected can be limited within the first accommodating space 121 between the first supporting wall 1231 and the first fixing member 124.

With regard to the battery 100 as shown in FIG. 3, as shown in FIG. 4, the support 120 may further include the second fixing member 125, the second fixing member 125 and the support body 123 are stacked in the third direction Z, and the support body 123 is arranged between the first fixing member 124 and the second fixing member 125. The third electrode output portion 113a and the fourth electrode output portion 114a are arranged in the second accommodating space 122 between the second fixing member 125 and the support body 123. The structural adhesive 170 is further configured to fixedly connect the third electrode output portion 113a and the fourth electrode output portion 114a to the support 120, and the adhesive filling channel 130 is further configured to guide the structural adhesive 170 into spaces between the third electrode output portion 113a and the fourth electrode output portion 114a and the support.

In this embodiment, by means of the support body 123 and the second fixing member 125 which are stacked in the third direction Z, the second accommodating space 122 for limiting the displacement of the third electrode output portion 113a and the fourth electrode output portion 114a in the third direction Z can be formed; and the adhesive filling channel 130 can further guide the structural adhesive 170 into the spaces between the third electrode output portion 113a and the fourth electrode output portion 114a and the support 120 so as to fix the third electrode output portion 113a and the fourth electrode output portion 114a to the support 120, so that the risk of tearing at junctions of the third electrode output portion 113a and the fourth electrode output portion 114a can be reduced.

Similarly, as shown in FIG. 5, the support body 123 includes a second supporting wall 1232, the second supporting wall 1232 and the first supporting wall 1231 are arranged opposite each other, and the second supporting wall 1232 is provided with second mounting holes 12321. At least one end of the second fixing member 125 in the second direction Y is provided with second buckles 12511 extending towards the second supporting wall 1232, and the second buckles 12511 are clamped with the second mounting holes 12321 so as to connect the support body 123 and the second fixing member 125.

In this embodiment, the second buckles 12511 of the second fixing member 125 are clamped with the second mounting holes 12321 in the second supporting wall 1232, so that the support body 123 can be connected to the second fixing member 125, and the third electrode output portion 113a and the fourth electrode output portion 114a which are connected can be limited within the second accommodating space 122 between the second supporting wall 1232 and the second fixing member 125.

Optionally, the first mounting holes 12311 and the second mounting holes 12321 are formed in the same end of the support body 123 in the second direction Y.

With regard to the battery 100 as shown in FIG. 2, when the support 120 is assembled between the two battery cells, which are connected in series, of the battery module 110, firstly, the support body 123 can be pushed in the second direction Y to be located below the first electrode output portion 111a and the second electrode output portion 112a which are electrically connected to each other, then the first fixing member 124 is moved downwards in the third direction Z to be located above the first electrode output portion 111a and the second electrode output portion 112a, and the first buckles 12411 are inserted into the first mounting holes 12311. With regard to the battery 100 as shown in FIG. 3, when the support 120 is assembled between the two battery cells, which are connected in series, of the battery module 110, firstly, the support body 123 can be pushed in the second direction Y to be located below the first electrode output portion 111a and the second electrode output portion 112a which are electrically connected to each other and to be located above the third electrode output portion 113a and the fourth electrode output portion 114 which are electrically connected to each other, then the first fixing member 124 is moved downwards in the third direction Z to be located above the first electrode output portion 111a and the second electrode output portion 112a, the first buckles 12411 are inserted into the first mounting holes 12311, the second fixing member 125 is moved upwards in the third direction Z to be located below the third electrode output portion 113a and the fourth electrode output portion 114a, and the second buckles 12511 are inserted into the second mounting holes 12321.

In another embodiment, before the support 120 is mounted between the two battery cells connected in series, the first fixing member 124 and/or the second fixing member 125 can be fixedly connected to the support body 123. For example, the first fixing member 124 and/or the second fixing member 125 can be fixedly connected to a first end of the support body 123 in the second direction Y, and openings/an openings can be formed between the first fixing member 124 and/or the second fixing member 125 and a second end of the support body 123 in the second direction Y, so that the first accommodating space 121 and/or the second accommodating space 122 which can penetrate through the support 120 in the first direction X and cannot penetrate through the support 120 in the second direction Y can be formed between the first fixing member 124 and/or the second fixing member 125 and the support body 123, and when the battery module 110 is assembled with the support 120, the first electrode output portion 111a and the second electrode output portion 112a which are electrically connected to each other and/or the third electrode output portion 113a and the fourth electrode output portion 114a which are electrically connected to each other may be inserted into the first accommodating space 121 and/or the second accommodating space 122 along the openings/opening formed between the first fixing member 124 and/or the second fixing member 125 and the second end of the support body 123 in the second direction Y.

Optionally, the first fixing member 124 and/or the second fixing member 125 being fixedly connected to the first end of the support body 123 in the second direction Y may refer to the first fixing member 124 and/or the second fixing member 125 being integrally formed with the first end, or refer to the first fixing member 124 and/or the second fixing member 125 being fixedly connected to the first end by means of external fixing structures, and may also refer to the first fixing member 124 and/or the second fixing member 125 being clamped with the first end firstly and then the first electrode output portion 111a and the second electrode output portion 112a which are electrically connected to each other and/or the third electrode output portion 113a and the fourth electrode output portion 114a which are electrically connected to each other being inserted into the first accommodating space 121 and/or the second accommodating space 122 along the openings/opening formed at the second end.

Optionally, as shown in FIG. 4, the adhesive filling channel 130 further includes second adhesive injection holes 132, and the second adhesive injection holes 132 are formed in the support body 123. Optionally, with regard to the battery 100 as shown in FIG. 2, the second adhesive injection flow holes 132 are configured to guide the structural adhesive 170 into the space between at least one of the first battery cell 111 and the second battery cell 112 and the support 120, so as to fixedly connect the at least one battery cell to the support 120. With regard to the battery 100 as shown in FIG. 3, the second adhesive injection flow holes 132 are configured to guide the structural adhesive 170 into the space between at least one of the first battery cell 111, the second battery cell 112, the third battery cell 113 and the fourth battery cell 114 and the support 120, so as to fixedly connect the at least one battery cell to the support 120.

In this embodiment, the battery cells are fixedly connected to the support 120 by means of the structural adhesive 170, so that the rigidity between the battery cells and the support 120 can be enhanced, the relative displacement of the battery cells and the support 120 can be prevented, and damage to the battery cells can be reduced.

Optionally, as shown in FIGS. 4-6, the support body 123 is provided with a cavity 1233.

In this embodiment, the support body 123 is of a structure provided with the cavity 1233, so that the weight of the support 120 can be reduced, and then the weight of the battery 100 can be reduced.

In other embodiments, the support body 123 may also be of solid plate-shaped structures.

Optionally, as shown in FIG. 6, the cavity 1233 includes two connecting arms 12331 distributed in the first direction X and two supporting walls 12332 distributed in the third direction Z, the two supporting walls 12332 include a first supporting wall 1231 and a second supporting wall 1232, the two connecting arms 12331 include a first connecting arm 1234 and a second connecting arm 1235, and the second adhesive injection holes 132 are formed in at least one of the two connecting arms 12331 and at least one of the two supporting walls 12332.

Further, optionally, the second adhesive injection holes 132 are formed in the two connecting arms 12331 and the two supporting walls 12332.

In this embodiment, the second adhesive injection holes 132 are formed in the two connecting arms 12331 and the two supporting walls 12332 of the support body 123, so that the structural adhesive 170 can be guided into the spaces between the battery cells and the support 120, and the rigidity between the battery module 110 and the support 120 can be enhanced.

Optionally, the second adhesive injection holes 132 are further configured to guide the structural adhesive 170 into spaces between the first battery cell 111 and the third battery cell 113 and between the second battery cell 112 and the fourth battery cell 114.

With regard to the support 120 as shown in FIG. 4, the first fixing member 124 is arranged above the support body 123, the second fixing member 125 is arranged below the support body 123, and the second adhesive injection flow holes 132 formed in the two supporting walls of the support body 123 may also be configured to guide the structural adhesive 170 into spaces between the third electrode output portion 113a and the fourth electrode output portion 114a and the support 120, so as to fixedly connect the third electrode output portion 113a and the fourth electrode output portion 114a to the support 120.

Optionally, as shown in FIGS. 7 and 8, the first fixing member 124 includes a first wall 1241 arranged opposite the first supporting wall 1231 and two first side walls 1242 extending towards the first supporting wall 1231 from two sides of the first wall 1241 distributed in the first direction X, and the first adhesive injection holes 131 are formed in the first wall 1241.

Optionally, as shown in FIG. 8, the first fixing member 124 is internally provided with a cavity. By means of such configuration, the weight of the support 120 can be reduced, and then the weight of the battery 100 can be reduced.

In other embodiments, the first fixing member 124 may also be solid, and then the first adhesive injection holes 131 need to penetrate through the whole first wall 1241.

In this embodiment, the first adhesive injection flow holes 131 are formed in the first wall 1241, so that the structural adhesive 170 may be guided into the spaces between the first electrode output portion 111a and the second electrode output portion 112a which are connected to each other and the support 120 so as to enhance the connection between the first electrode output portion 111a and the second electrode output portion 112a which are connected to each other and the support 120, and the structural adhesive 170 may also be guided into the space between the first fixing member 124 and the support body 123 so as to enhance the connection between the first fixing member 124 and the support body 123.

Optionally, as shown in FIGS. 7 and 8, the second fixing member 125 includes a second wall 1251 arranged opposite the second supporting wall 1232 and two second side walls 1252 extending towards the second supporting wall 1232 from two sides of the second wall 1251 distributed in the first direction X.

Optionally, as shown in FIG. 8, the second fixing member 125 is internally provided with a cavity. By means of such configuration, the weight of the support 120 can be reduced, and then the weight of the battery 100 can be reduced.

In other embodiments, the second fixing member 125 may also be solid.

Optionally, reference is continuously made to FIG. 8, and first reinforcing ribs 1243 extending from the first wall 1241 to the first supporting wall 1231 are arranged between the two first side walls 1242.

In this embodiment, the first reinforcing ribs 1243 are arranged on the first wall 1241, so that the rigidity of the first wall 1241 can be enhanced.

Optionally, the first reinforcing ribs 1243 may limit movements of the first electrode output portion 111a and the second electrode output portion 112a in the third direction Z.

In this embodiment, the first reinforcing ribs 1243 are arranged between the two first side walls 1242, so that movement spaces of the first electrode output portion 111a and the second electrode output portion 112a can be limited, and when the battery 100 is impacted, the tearing caused by shaking of the first electrode output portion 111a and the second electrode output portion 112a which are connected can be prevented.

Optionally, as shown in FIG. 8, second reinforcing ribs 1253 extending from the second wall 1251 to the second supporting wall 1232 are arranged between the two second side walls 1252.

In this embodiment, the second reinforcing ribs 1253 are arranged on the second wall 1251, so that the rigidity of the second wall 1251 can be enhanced.

Optionally, the second reinforcing ribs 1253 are configured to limit movements of the third electrode output portion 113a and the fourth electrode output portion 114a in the third direction Z.

In this embodiment, the second reinforcing ribs 1253 are arranged between the two second side walls 1252, so that movement spaces of the third electrode output portion 113a and the fourth electrode output portion 114a can be limited, and when the battery 100 is impacted, the tearing caused by shaking of the third electrode output portion 113a and the fourth electrode output portion 114a which are connected can be prevented.

Further, in the third direction Z, the first reinforcing ribs 1243 are closer to the first electrode output portion 111a and the second electrode output portion 112a than the two first side walls 1242. By means of such configuration, supporting of the first electrode output portion 111a and the second electrode output portion 112a is facilitated, thereby avoiding shaking of the first electrode output portion 111a and the second electrode output portion 112a. In the third direction Z, the second reinforcing ribs 1253 are closer to the third electrode output portion 113a and the fourth electrode output portion 114a than the two second side walls 1252. By means of such configuration, supporting of the third electrode output portion 113a and the fourth electrode output portion 114a is facilitated, thereby avoiding shaking of the third electrode output portion 113a and the fourth electrode output portion 114a.

Optionally, as shown in FIG. 8, a plurality of the first reinforcing ribs 1243 may be arranged on the first wall 1241, and optionally, the plurality of first reinforcing ribs 1243 may be arranged in a spaced manner in the first direction X. Optionally, the plurality of first reinforcing ribs 1243 may also be arranged in a spaced manner in the second direction Y. Further, the plurality of first reinforcing ribs 1243 may be arranged in a crossing manner in the first direction X and the second direction Y.

In this embodiment, the plurality of first reinforcing ribs 1243 are arranged in the first direction X and/or the second direction Y, so that supporting of the first electrode output portion 111a and the second electrode output portion 112a can be enhanced.

Similarly, as shown in FIG. 8, a plurality of the second reinforcing ribs 1253 may be arranged on the second wall 1251, and optionally, the plurality of second reinforcing ribs 1253 may be arranged in a spaced manner in the first direction X. Optionally, the plurality of second reinforcing ribs may also be arranged in a spaced manner in the second direction Y. Further, the plurality of second reinforcing ribs 1253 may also be arranged in a crossing manner in the first direction X and the second direction Y.

In this embodiment, the plurality of second reinforcing ribs 1253 are arranged in the first direction X and/or the second direction Y, so that supporting of the third electrode output portion 113a and the fourth electrode output portion 114a can be enhanced.

Optionally, as shown in FIG. 7, the first wall 1241 of the first fixing member 124 is provided with two symmetric first clamping groove structures 12412, and the two first clamping groove structures 12412 are configured to allow an external assembly apparatus to grab the first fixing member 124.

Optionally, the two first clamping groove structures 12412 may be distributed in the first direction X, and may also be distributed in the second direction Y. Further, as shown in FIG. 7, the two first clamping groove structures 12412 are of stepped structures arranged in two edge zones of the first wall 1241 in the first direction X.

In this embodiment, the two symmetric first clamping groove structures 12412 are arranged on the first wall 1241 of the first fixing member 124, thereby facilitating the external assembly apparatus grabbing the first fixing member 124, and improving the assembly efficiency.

Similarly, as shown in FIG. 7, the second wall 1251 of the second fixing member 125 is provided with two symmetric second clamping groove structures 12512, and the two second clamping groove structures 12512 are configured to allow the external assembly apparatus to grab the second fixing member 125.

Optionally, the two second clamping groove structures 12512 may be distributed in the first direction X, and may also be distributed in the second direction Y. Further, as shown in FIG. 7, the two second clamping groove structures 12512 are of stepped structures arranged in two edge zones of the second wall 1251 in the first direction X.

In this embodiment, the two symmetric second clamping groove structures 12512 are arranged on the second wall 1251 of the second fixing member 125, thereby facilitating the external assembly apparatus grabbing the second fixing member 125, and improving the assembly efficiency.

Optionally, as shown in FIG. 9, one end of the first supporting wall 1231 in the second direction Y is provided with a first stop block 12312, and the first stop block 12312 is configured to limit movements of the first electrode output portion 111a and the second electrode output portion 112a in the second direction Y.

In this embodiment, the first stop block 12312 is arranged on the first supporting wall 1231 to limit the first electrode output portion 111a and the second electrode output portion 112a in the second direction Y, so that the risk of tearing caused by shaking of the first electrode output portion 111a and the second electrode output portion 112a which are connected can be reduced.

Optionally, as shown in FIG. 9, one end of the second supporting wall 1232 in the second direction Y is provided with a second stop block 12322, and the second stop block 12322 is configured to limit movements of the third electrode output portion 113a and the fourth electrode output portion 114a in the second direction Y.

In this embodiment, the second stop block 12322 is arranged on the second supporting wall 1232 to limit the third electrode output portion 113a and the fourth electrode output portion 114a in the second direction Y, so that the risk of tearing caused by shaking of the third electrode output portion 113a and the fourth electrode output portion 114a which are connected can be reduced.

Optionally, the second stop block 12322 and the first stop block 12312 are arranged at the same end of the support body 123 in the second direction Y, thereby facilitating assembly.

FIG. 10 shows a partial front view of the battery 100 as shown in FIG. 3, and in the figure, the shaded portion is the coverage zone of the structural adhesive 170. Optionally, as shown in FIG. 10, in the third direction Z, the size of the battery module 110 is H1, the size of the coverage zone of the structural adhesive 170 is H2, and 1/3 ≤ H2/H1 ≤ 1.

Optionally, H1 may be the maximum size of the battery module 110 in the third direction Z. In addition, H2 may be the maximum size of the coverage zone of the structural adhesive 170 in the third direction Z.

In this embodiment, in the third direction Z, the size H2 of the coverage zone of the structural adhesive 170 and the size of the battery module 110 are set as 1/3 ≤ H2/H1 ≤ 1, upon verification by means of a large number of experiments by the applicant, when the ratio of H2/H1 is within the above range, the problem that the requirement for the mechanical strength cannot be met due to the insufficient strength caused by an excessively thin coating zone can be avoided, and the problems of abnormities in assembly and appearance of the battery module 110 due to an excessively thick coating zone can also be avoided.

Optionally, as shown in FIG. 10, the second battery cell 112 includes a main body portion 1112, the electrode output portion 112a and a stepped portion 1122, and the main body portion 1121 is connected to the electrode output portion 112a by means of the stepped portion 1122. It should be noted that although the second battery cell 112 is described here, the structure of any one battery cell of the battery module 110 may refer to the structure of the second battery cell 112 as shown in FIG. 10.

Further, optionally, as shown in FIG. 10, in the third direction Z, the size of the stepped portion 1122 is H3, the size of the main body portion 1121 is H4, and 1/3 ≤ H3/H4 ≤ 1.

In this embodiment, in the third direction Z, the size H3 of each of the stepped portions 1122 and the size H4 of each of the main body portions 1121 are set as 1/3 ≤ H3/H4 ≤ 1, upon verification by means of a large number of experiments by the applicant, when the ratio of H3/H4 is within the above range, a structural weak point formed due to uneven coverage of the structural adhesive 170 due to the excessively large height difference between the stepped portion 1122 and the main body portion 1121 can be avoided.

Optionally, as shown in FIG. 10, in the first direction X, the size of the stepped portion 1122 is L2, the size of the structural adhesive 170 covering the stepped portion 1122 is L1, and 1/3 ≤ L1/L2 ≤ 1.

Optionally, L1 here may be the maximum size of the structural adhesive 170 covering the stepped portion 1122 in the first direction X.

In this embodiment, in the first direction X, the size L2 of each of the stepped portions 1122 and the size L1 of the structural adhesive 170 covering the stepped portion 1122 are set as 1/3 ≤ L1/L2 ≤ 1, upon verification by means of a large number of experiments by the applicant, when the ratio of L1/L2 is within the above range, the problem that the requirement for the rigidity cannot be met due to the excessively few adhesives, and the problem of local stress concentration of each battery cell due to the fact that the too many adhesive overflows to the main body portion 1121 can also be avoided.

Optionally, the structural adhesive 170 may cover part of an upper surface and part of a lower surface of the battery module 110. For example, as shown in FIG. 10, the structural adhesive 170 covers part of the upper surface 1103 and part of the lower surface 1104 of the battery module 110 respectively.

In this embodiment, the structural adhesive 170 covers part of the upper surface and part of the lower surface of the battery module 110 and forms a riveted structure with the battery module 110, so that the battery module 110 is connected to the support 120 more stably.

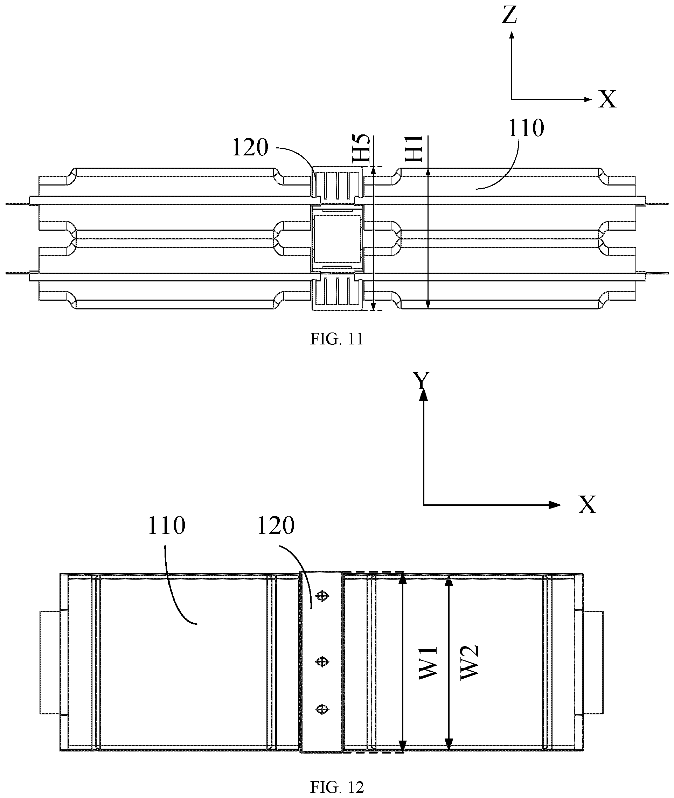

FIG. 11 is a front view of the battery 100 as shown in FIG. 3. FIG. 12 is a top view of the battery 100 as shown in FIG. 3. Optionally, as shown in FIG. 11, in the third direction Z, the size of the support 120 is H5, the size of the battery module 110 is H1, and H5 is greater than H1. Optionally, H1 may be the maximum size of the battery module 110 in the third direction Z. Optionally, as shown in FIG. 12, in the second direction Y, the size of the support 120 is W1, the size of the battery module 110 is W2, and W1 is greater than W2. Optionally, W2 may be the maximum size of the battery module 110 in the second direction Y.

In this embodiment, in the third direction Z, the size H5 of the support 120 is set to be greater than the size H1 of the battery module 110, and in the second direction Y, the size W1 of the support 120 is set to be greater than the size W2 of the battery module 110, so that when the battery 100 is subjected to a shock impact, the support 120 makes contact with a housing firstly to play a buffering role, thereby reducing the damage to the battery cells.

Optionally, as shown in FIG. 6, the first supporting wall 1231 is provided with a first accommodating groove 12313 extending in the second direction Y, the first accommodating groove 12313 accommodates a first sampling terminal, and the first sampling terminal is configured to acquire parameters of the first battery cell 111 and/or the second battery cell 112.

Optionally, the first sampling terminal may be a temperature sensor, for example, a negative temperature coefficient (NTC) temperature sensor. The first sampling terminal may also be a voltage sensor, a current detector and the like, and the type of the first sampling terminal is not limited in the embodiments of the present application.

In this embodiment, the first accommodating groove 12313 is formed in the first supporting wall 1231 to accommodate the first sampling terminal, so that the first battery cell 111 and/or the second battery cell 112 can be monitored in real time, and the safety of the battery 100 can be improved.

Further, the first accommodating groove 12313 may also be configured to accommodate the structural adhesive 170 so as to fix the first sampling terminal and the support 120.

In this embodiment, the first sampling terminal and the support 120 are fixedly connected to each other by means of the structural adhesive 170, thereby avoiding shaking of the first sampling terminal, and improving the sampling accuracy of the first sampling terminal.

Similarly, the second supporting wall 1232 is provided with a second accommodating groove extending in the second direction Y, the second accommodating groove is configured to support a second sampling terminal, and the second sampling terminal is configured to acquire parameters of the third battery cell 113 and/or the fourth battery cell 114.

Optionally, the second sampling terminal may be a temperature sensor, for example, a NTC temperature sensor. The second sampling terminal may also be a voltage sensor, a current detector and the like, and the type of the second sampling terminal is not limited in the embodiments of the present application.

In this embodiment, the second accommodating groove is formed in the second supporting wall 1232 to accommodate the second sampling terminal, so that the third battery cell 113 and/or the fourth battery cell 114 can be monitored in real time, and the safety of the battery 100 can be improved.

Further, the second accommodating groove may also be configured to accommodate the structural adhesive 170 so as to fix the second sampling terminal and the support 120.

In this embodiment, the second sampling terminal and the support 120 are fixedly connected to each other by means of the structural adhesive 170, thereby avoiding shaking of the second sampling terminal, and improving the sampling accuracy of the second sampling terminal.

Optionally, in this embodiment of the present application, in the third direction Z, the second fixing member 125 and the first fixing member 124 are arranged symmetrically relative to the support body 123. Symmetric arrangement may refer to the second fixing member 125 and the first fixing member 124 being completely consistent in structure and symmetric in position, and may only refer to the second fixing member 125 and the first fixing member 124 being symmetric in position but not completely consistent in structure.

In this embodiment, the second fixing member 125 and the first fixing member 124 are arranged symmetrically relative to the support body 123, so that the production difficulty of the support 120 can be reduced.

Optionally, the structural adhesive 170 in the embodiments of the present application is made of materials including epoxy resin, polyurethane, acrylate, silicone, and polyester resin and derivatives thereof or one or more of the modified polyester resin, and the structural adhesive should be non-viscous after being solidified or some fiber or particle reinforced phases, for example, inorganic particles, carbon fibers or carbon nanotubes, may be added in the structural adhesive.

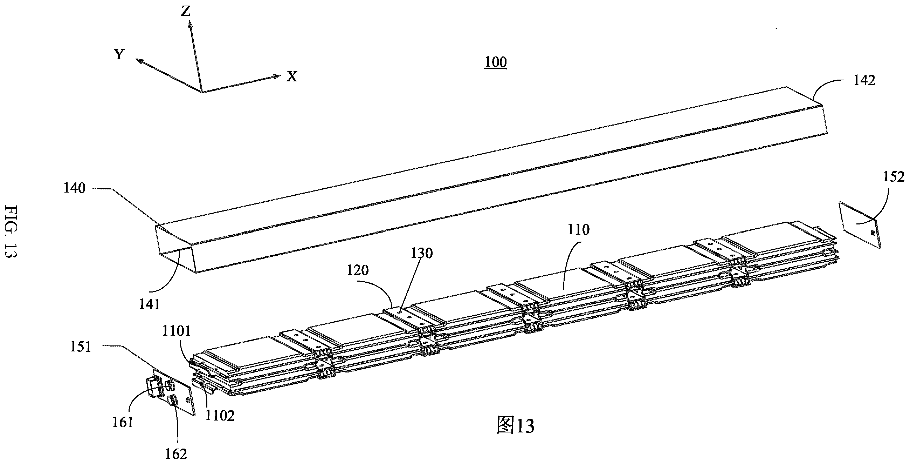

FIG. 13 shows a schematic exploded view of the battery 100 in the embodiment of the present application. As shown in FIG. 13, the battery 100 further includes a housing 140, wherein the housing 140 is configured to accommodate the battery module 110 and the support 120.

In some embodiments, the housing 140 may be a metal housing, for example, the housing 140 may be an aluminum housing. Under such circumstance, the support 120 is an insulating support so as to avoid the contact between the electrode output portions of the battery cells of the battery module 110 and the housing 140, thereby improving the safety of the battery 100.

Optionally, the support 120 is a plastic support.

In another embodiment, the housing may be an insulating housing, for example, the housing 140 may be a plastic housing. At this time, the support 120 may be made of any material.

In this embodiment, the battery module 110 and the support 120 are arranged in the housing 140, so that the risk of damage to the battery cells when the battery 100 is subjected to the shock impact can be reduced.

Reference is continuously made to FIG. 13, the housing 140 is provided with an opening; and the battery 100 further includes: an end cover which covers the opening so as to encapsulate the battery module 110 and the support 120 in the housing 140. It should be noted that the number and position of the opening are not limited in the embodiments of the present application. For example, the housing 140 may be provided with one opening, the opening may be formed in any direction, and correspondingly, the battery 100 includes one end cover. For another example, the housing 140 may be provided with two openings, the two openings may be formed opposite each other in any direction, and correspondingly, the battery 100 includes two end covers.

Further, the end cover is further provided with a positive electrode terminal and a negative electrode terminal, the positive electrode terminal is electrically connected to a positive electrode output portion of the battery module 110, and the negative electrode terminal is electrically connected to a negative electrode output portion of the battery module 110.

As shown in FIG. 13, the housing 140 includes a first opening 141 and a second opening 142 which are formed in the first direction X; and the battery 100 further includes: a first end cover 151 and a second end cover 152, the first end cover 151 covers the first opening 141, and the second end cover 152 covers the second opening 142. The positive electrode output portion 1101 of the battery module 110 is electrically connected to the positive electrode terminal 161, the negative electrode output portion 1102 is electrically connected to the negative electrode terminal 162, and the positive electrode terminal 161 and the negative electrode terminal 162 are arranged in the same end cover of the two end covers, for example, the positive electrode terminal 161 and the negative electrode terminal 162 are arranged on the first end cover 151.

In other words, the positive electrode output portion 1101 and the negative electrode output portion 1102 of the battery module 110 are arranged at the same end of the battery module 110 in the first direction X.

An embodiment of the present application further provides the electricity consumption device, and the electricity consumption device may include the battery 100 in the above-mentioned embodiments, which is configured to provide electric energy for the electricity consumption device. Optionally, the electricity consumption device may be the vehicle, the ship or the aircraft.

The battery 100 in the above-mentioned embodiments is arranged in the electricity consumption device, and the support 120 is arranged between the first battery cell 111 and the second battery cell 112 such that the first electrode output portion 111a and the second battery electrode output portion 112a which are connected are arranged in the first accommodating space 121 of the support 120; and the adhesive filling channel 130 is arranged on the support 120 to guide the structural adhesive 170 into the spaces between the first electrode output portion 111a and the second battery electrode output portion 112a which are connected and the support 120, so that the first electrode output portion 111a and the second battery electrode output portion 112a which are connected can be fixedly connected to the support 120, the rigidity between the battery module 110 and the support 120 which are connected in series can be enhanced, the first electrode output portion 111a and the second battery electrode output portion 112a which are connected can be prevented from shaking in the first accommodating space 121 of the support 120, the risk of tearing can be reduced, and the electrical connection stability of the battery 100 can be improved.

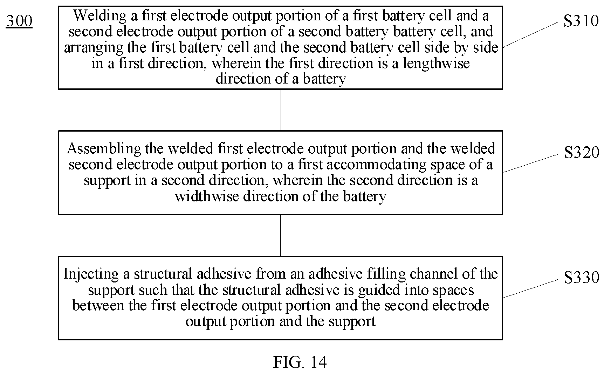

An embodiment of the present application further provides the method for producing a battery. Optionally, the battery may be the battery 100 described in any one of the above-mentioned embodiments. As shown in FIG. 14, the method 300 may include part of or all content below:
S310, welding the first electrode output portion 111a of the first battery cell 111 and the second electrode output portion 112a of the second battery cell 112, and arranging the first battery cell 111 and the second battery cell 112 side by side in the first direction X, wherein the first direction X is the length direction of the battery 100;
S320, assembling the welded first electrode output portion 111a and the welded second electrode output portion 112a to the first accommodating space 121 of the support 120 in the second direction Y, wherein the second direction Y is the width direction of the battery 100; and
S330, injecting the structural adhesive 170 from the adhesive filling channel 130 of the support 120 such that the structural adhesive 170 is guided into the spaces between the first electrode output portion 111a and the second electrode output portion 112a and the support 120.

Although the present application has been described with reference to the preferred embodiments, various improvements may be made thereto and components therein may be replaced with equivalents without departing from the scope of the present application. In particular, the various technical features mentioned in the various embodiments may be combined in any manner so long as there is no structural conflict. The present application is not restricted to the particular embodiments disclosed herein, but to include all the technical solutions falling within the scope of the claims.

## Claims

1. A battery (100), comprising:
a battery module (110) which comprises a first battery cell (111) and a second battery cell (112) connected in series in a first direction (X), wherein a first electrode output portion (1 11a) of the first battery cell (111) is electrically connected to a second electrode output portion (112a) of the second battery cell (112) in a welded manner, and the first direction (X) is a length direction of the battery (100);
a support (120) which is arranged between the first battery cell (111) and the second battery cell (112), wherein the support (120) is provided with a first accommodating space (121), and the first accommodating space (121) is configured to accommodate the first electrode output portion (1 11a) and the second electrode output portion (112a); and
a structural adhesive (170) which is configured to fixedly connect the first electrode output portion (1 11a) and the second electrode output portion (112a) to the support (120),
wherein the support (120) is provided with an adhesive filling channel (130) which is configured to guide the structural adhesive (170) into spaces between the first electrode output portion (1 11a) and the second electrode output portion (112a) and the support (120).

2. The battery (100) according to claim 1, wherein the support (120) comprises:
a support body (123); and
a first fixing member (124) which is stacked with the support body (123) in a third direction (Z), wherein the third direction (Z) is a thickness direction of the battery (100); and
the first accommodating space (121) is formed between the support body (123) and the first fixing member (124), the adhesive filling channel (130) comprises first adhesive injection holes (131), and the first adhesive injection holes (131) are formed in the first fixing member (124).

3. The battery (100) according to claim 2, wherein the first fixing member (124) comprises a first wall (1241) and two first side walls (1242), the first wall (1241) and the support body (123) are arranged opposite each other, the two first side walls (1242) respectively extend towards the support body (123) from two ends of the first wall (1241) in the first direction (X), and the first adhesive injection holes (131) are formed in the first wall (1241).

4. The battery (100) according to claim 2 or 3, wherein the battery module (110) further comprises:
a third battery cell (113) and a fourth battery cell (114) connected in series in the first direction (X), wherein a third electrode output portion (113a) of the third battery cell (113) is electrically connected to a fourth electrode output portion (114a) of the fourth battery cell (114), the third battery cell (113) and the first battery cell (111) are stacked in the third direction (Z), and the fourth battery cell (114) and the second battery cell (112) are stacked in the third direction (Z).

5. The battery (100) according to claim 4, wherein the support (120) further comprises:
a second fixing member (125) which is stacked with the support body (123) in the third direction (Z), wherein the support body (123) is arranged between the first fixing member (124) and the second fixing member (125), and a second accommodating space (122) is formed between the support body (123) and the second fixing member (125); and
the structural adhesive (170) is further configured to fixedly connect the third electrode output portion (113a) and the fourth electrode output portion (114a) to the support (120), and the adhesive filling channel (130) is further configured to guide the structural adhesive (170) into spaces between the third electrode output portion (113a) and the fourth electrode output portion (114a) and the support (120).

6. The battery (100) according to claim 5, wherein the adhesive filling channel (130) further comprises second adhesive injection holes (132), the second adhesive injection holes (132) are formed in the support body (123), and the second adhesive injection holes (132) are configured to guide the structural adhesive (170) into the space between at least one of the first battery cell (111), the second battery cell (112), the third battery cell (113) and the fourth battery cell (114) and the support body (123), so as to fixedly connect the at least one battery cell to the support (120).

7. The battery (100) according to claim 6, wherein the support body (123) is provided with a cavity (1233).

8. The battery (100) according to claim 7, wherein the cavity (1233) comprises two connecting arms (12331) distributed in the first direction (X) and two supporting walls (12332) distributed in the third direction (Z), and the second adhesive injection holes (132) are formed in at least one of the two connecting arms (12331) and at least one of the two supporting walls (12332).

9. The battery (100) according to claim 8, wherein the second adhesive injection holes (132) are formed in the two connecting arms (12331) and the two supporting walls (12332).

10. The battery (100) according to claim 9, wherein the second adhesive injection holes (132) are further configured to guide the structural adhesive (170) into spaces between the first battery cell (111) and the third battery cell (113) and between the second battery cell (112) and the fourth battery cell (114).

11. The battery (100) according to any one of claims 1-10, wherein in the third direction (Z), the size of the battery module (110) is H1, the size of a coverage zone of the structural adhesive (170) is H2, 1/3 ≤ H2/H1 ≤ 1, and the third direction (Z) is the thickness direction of the battery.

12. The battery (100) according to any one of claims 1-11, wherein any one battery cell of the battery module (110) comprises a main body portion (1121), an electrode output portion and a stepped portion (1122), and the main body portion (1121) is connected to the electrode output portion by means of the stepped portion (1122).

13. The battery (100) according to claim 12, wherein in the third direction (Z), the size of the stepped portion (1122) is H3, the size of the main body portion (1121) is H4, and 1/3 ≤ H3/H4 ≤ 1.

14. The battery (100) according to claim 12 or 13, wherein in the first direction (X), the size of the stepped portion (1122) is L2, the size of the structural adhesive (170) covering the stepped portion (1122) is L1, and 1/3 ≤ L1/L2 ≤ 1.

15. The battery (100) according to any one of claims 1-14, wherein the structural adhesive (170) covers part of an upper surface and part of a lower surface of the battery module (110).

16. The battery (100) according to any one of claims 1-15, wherein in the second direction (Y), the size of the support (120) is greater than the size of the battery module (110); and/or in the third direction (Z), the size of the support (120) is greater than the size of the battery module (110).

17. The battery (100) according to claim 3, wherein first reinforcing ribs (1243) extending from the first wall (1241) to the support body (123) are arranged between the two first side walls (1242).

18. The battery (100) according to claim 17, wherein a plurality of the first reinforcing ribs (1243) are distributed in a spaced manner in the first direction (X) and/or the second direction (Y); or a plurality of the first reinforcing ribs (1243) are distributed in a crossing manner in the first direction (X) and the second direction (Y).

19. The battery (100) according to any one of claims 3, 17 and 18, wherein the first wall (1241) is provided with two symmetric first clamping groove structures (1242), and the two first clamping groove structures (1242) are configured to allow an external assembly apparatus to grab the first fixing member (124).

20. The battery (100) according to any one of claims 2-10, wherein the support body (123) comprises a first supporting wall (1231), the first supporting wall (1231) is provided with first mounting holes (12311), at least one end of the first fixing member (123) in the second direction (Y) is provided with first buckles (12411) extending towards the first supporting wall (1231), the first buckles (12411) are clamped with the first mounting holes (12311), and the second direction (Y) is a width direction of the battery (100).

21. The battery (100) according to claim 20, wherein one end of the first supporting wall (1231) in the second direction (Y) is provided with a first stop block (12312), and the first stop block (12312) is configured to limit movements of the first electrode output portion (111a) and the second electrode output portion (112a) in the second direction (Y).

22. The battery (100) according to claim 20 or 21, wherein the first supporting wall (1231) is provided with a first accommodating groove (12313) extending in the second direction (Y), the first accommodating groove (12313) accommodates a first sampling terminal, and the first sampling terminal is configured to acquire parameters of the first battery cell (111) and/or the second battery cell (112).

23. The battery (100) according to any one of claims 5-10, wherein in the third direction (Z), the second fixing member (125) and the first fixing member (124) are arranged symmetrically relative to the support body (123).

24. The battery (100) according to any one of claims 1-23, further comprising:
a housing (140), wherein the housing (140) is configured to accommodate the battery module (110) and the support (120).

25. The battery (100) according to claim 24, wherein the housing (140) is provided with an opening; the battery (100) further comprises:
an end cover which covers the opening so as to encapsulate the battery module (110) and the support (120) in the housing (140); and
the end cover is provided with a positive electrode terminal (161) and a negative electrode terminal (162), the positive electrode terminal (161) is electrically connected to a positive electrode output portion (1101) of the battery module (110), and the negative electrode terminal (162) is electrically connected to a negative electrode output portion (1102) of the battery module (110).

26. An electricity consumption device, comprising the battery (100) according to any one of claims 1-25, wherein the battery is configured to provide electric energy for the electricity consumption device.

27. A method for producing a battery (100), comprising:
welding a first electrode output portion (111a) of a first battery cell (111) and a second electrode output portion (112a) of a second battery cell (112), and arranging the first battery cell (111) and the second battery cell (112) side by side in a first direction (X), wherein the first direction (X) is a length direction of the battery (100);
assembling the welded first electrode output portion (111a) and the welded second electrode output portion (112a) to a first accommodating space of a support (120) in a second direction (Y), wherein the second direction (Y) is a width direction of the battery (100); and
injecting a structural adhesive (170) from an adhesive filling channel (130) of the support (120) such that the structural adhesive (170) is guided into spaces between the first electrode output portion (1 11a) and the second electrode output portion (112a) and the support (120).
